# EUROPÄISCHE PATENTSCHRIFT

(11) **EP 2 740 636 B1**
(45) Veröffentlichungstag und Bekanntmachung des Hinweises auf die Patenterteilung: **22.03.2017**
(21) Anmeldenummer: 13195974.4
(22) Anmeldetag: 06.12.2013
(51) Int. Cl.: B60R 22/20, B60R 22/24

(54) **Schlitten für eine Höhenverstellung eines schulternahen Ankerpunktes eines Fahrzeugrückhaltesystems**
Slide for height adjustment of an anchoring point of a vehicle restraint system located proximal to the shoulders
Glissière pour le réglage en hauteur d'un point d'ancrage d'un système de retenue de véhicule situé proche des épaules

(30) Priorität: 07.12.2012 DE 202012104759 U
(43) Veröffentlichungstag der Anmeldung: 11.06.2014
(73) Patentinhaber: HS Products Engineering GmbH, 82216 Maisach (DE)
(72) Erfinder: Heckmayr, Thomas, 86871 Rammingen (DE); Muhr, Klaus Jürgen, 82299 Türkenfeld (DE)
(74) Vertreter: Patentanwälte Bals & Vogel

(56) Entgegenhaltungen:
- EP-A1- 0 092 105
- DE-A1- 3 541 179
- DE-A1- 3 740 924
- DE-A1- 3 744 577
- GB-A- 2 190 278

## Beschreibung

Die vorliegende Erfindung betrifft eine Höhenverstellvorrichtung für die Höhenverstellung eines schulternahen Ankerpunktes eines Fahrzeugrückhaltesystems.

Grundsätzlich ist es bekannt, dass Fahrzeugrückhaltesysteme, insbesondere Fahrzeugsicherheitsgurte, eine Verstellmöglichkeit für unterschiedlich große Personen aufweisen. Die Fahrzeugsicherheitsgurte sind dabei üblicherweise um einen Ankerpunkt umgelenkt, welcher im Bereich der Schulterregion des Insassen angeordnet ist. Dieser Ankerpunkt lässt sich bei solchen hochwertigen Fahrzeugen in der Höhe verstellen. Um diese Höhenverstellung zu gewährleisten, weisen bekannte Vorrichtungen eine Gegenführungsschiene auf, in welcher üblicherweise ein mehrteiliger Schlitten geführt ist. Der Schlitten hat dabei im Wesentlichen die folgenden Funktionen. Zum einen dient er für eine definierte Bewegung des Ankerpunktes in geführter Weise mit der Gegenführungsschiene. Zum anderen bietet er eine Befestigungsschnittstelle, um den Ankerpunkt an dem Schlitten zu befestigen.

Nachteilig bei den bekannten Schlitten ist es, dass diese aufwendig hergestellt werden müssen. So sind insbesondere zumindest zwei Bauteile für die Fertigung des Schlittens notwendig. Zum einen, wird die Befestigungsschnittstelle zur Verfügung gestellt, welche eine besonderes hohe Festigkeit aufweisen muss, um entsprechende Kräfte, insbesondere im Crashfall, vom Ankerpunkt auf die Karosserie übertragen zu können. Darüber hinaus ist üblicherweise ein zweites Bauteil für den Schlitten vorgesehen, welches die entsprechenden Führungsflächen zur Verfügung stellt. Hier ist eine möglichst genaue Toleranz einzuhalten, um möglichst geringes Führungsspiel ohne das Risiko des Verklemmens zur Verfügung stellen zu können. Als weitere Anforderung ist die Funktion des Antriebs zur Verfügung zu stellen. Hierfür kann zum Beispiel über einen Spindelantrieb eine Spindelöffnung in einem zweiten oder dritten Bauteil des Schlittens eingebracht sein. Hier sind bevorzugter Weise geräuschdämpfende Materialien zu verwenden. Durch die Kombination unterschiedlicher Materialien werden die Herstellung schwieriger, das Gewicht, die Größe und die Gesamtkomplexität des Schlittens deutlich erhöht. Dies geht auch zu Lasten der Kosten, sodass bekannte Schlitten relativ teuer in der Herstellung sind.

Die DE 37 44577 A zeigt eine Höhenverstellvorrichtung nach dem Oberbegriff des Anspruchs 1.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise einen Schlitten für die Höhenverstellvorrichtung zur Verfügung zu stellen.

Voranstehende Aufgabe wird gelöst durch eine Höhenverstellvorrichtung mit den Merkmalen des Anspruchs 1.

Weitere Merkmale und Details der Erfindung ergeben sich aus den Unteransprüchen, der Beschreibung und den Zeichnungen.

Ein erfindungsgemäßer Schlitten für eine Höhenverstellvorrichtung eines schulternahen Ankerpunktes eines Fahrzeugrückhaltesystems, insbesondere eines Fahrzeugsicherheitsgurtes, weist einen Schlittenkörper auf. Der Schlittenkörper ist mit zwei parallel zueinander verlaufenden Führungsabschnitten für einen führenden Eingriff in Gegenführungsabschnitte der Höhenverstellvorrichtung ausgestattet. Dabei weist der Schlittenkörper eine Spindelöffnung mit einem Innengewinde für einen Gewindeeingriff mit einer Antriebsspindel auf. Weiter ist am Schlittenkörper eine Befestigungsschnittstelle für die Befestigung einer Umlenkung für den Fahrzeugsicherheitsgurt vorgesehen. Dabei sind die Führungsabschnitte, die Spindelöffnung und die Befestigungsschnittstelle einstückig mit dem Schlittenkörper ausgebildet.

Erfindungsgemäß wird also auf eine komplexe Ausbildung des Schlittens mit unterschiedlichen, separaten Bauteilen verzichtet. Vielmehr wird ein einstückiger Schlittenkörper zur Verfügung gestellt, welcher insbesondere drei Funktionalitäten in einem einzigen, monolithischen bzw. integralen Bauteil in Form des Schlittenkörpers zur Verfügung stellt. Dabei handelt es sich um die Führungsfunktionalität, welche durch die Korrelation der parallel zueinander verlaufenden Führungsabschnitte und entsprechenden Gegenführungsabschnitten der Höhenverstellvorrichtung ausgebildet wird. Die zweite Funktion ist die des Antriebs, welche durch die Spindelöffnung mit dem Innengewinde und der zugehörigen Korrelation zur Antriebsspindel sichergestellt wird. Zuletzt wird die Befestigungsfunktionalität des Ankerpunktes mit Hilfe der Befestigungsschnittstelle ausgebildet.

Erfindungsgemäß werden somit deutlich weniger Teile notwendig, um einen entsprechenden Schlitten auszubilden. Dies führ dazu, dass der Schlitten in Summe kostengünstiger und einfacher herzustellen ist. Auch kann dies zu kompakteren, insbesondere flacheren Bauweisen führen. Damit kann ein erfindungsgemäßer Schlitten zu einer Höhenverstellvorrichtung führen, welche insgesamt eine flachere Bauweise aufweist. Dies führt zu verbesserter Anordnungsmöglichkeit in der B-Säule bzw. der C-Säule eines Fahrzeugs.

Unter einer einstückigen Ausbildung mit dem Schlittenkörper ist zu verstehen, dass die Führungsabschnitte, die Spindelöffnung und die Befestigungsschnittstelle integral, monolithisch bzw. aus einem einzigen gemeinsamen Werkstoff ausgebildet sind. Dies führ dazu, dass die Funktionalität durch diesen einen Werkstoff gewährleistet wird. Hierzu wird später noch näheres ausgeführt. Insbesondere kann dabei dieser gemeinsame Werkstoff des Schlittenkörpers durch ein Kaltpressverfahren hergestellt sein. Selbstverständlich können einzelne Abschnitte des Schlittenkörpers noch nachbearbeitet sein, sodass zum Beispiel durch eine Beschichtung, durch Gefügeveränderungen oder andere Beeinflussungsmöglichkeiten mechanische Eigenschaften des Werkstoffs bzw. des Schlittenkörpers abschnittsweise variiert bzw. verändert werden können.

Ein erfindungsgemäßer Schlitten lässt sich nun durch eine Antriebsspindel translatorisch über die Führungsabschnitte in der Gegenführungsschiene geführt zwischen zwei Richtungen bewegen. Damit lässt sich translatorisch eine Höhenverstellung realisieren. Die Befestigungsschnittstelle kann in beliebiger Weise ausgeführt sein. Zum Beispiel kann ein Gewindebolzen vorgesehen sein, welcher für eine Verschraubung einer entsprechenden Ankervorrichtung für die Befestigung des Ankerpunktes ausgebildet ist.

Die Verstellung über die Antriebsspindel kann in unterschiedlichster Weise erfolgen. Zum Beispiel kann eine Antriebsvorrichtung, insbesondere in der später noch beschriebenen elektromotorischen Ausbildung, für die translatorische Bewegung des Schlittens vorgesehen werden.

Die Führungsabschnitte, welche parallel zueinander verlaufen definieren durch ihren parallelen Verlauf entsprechende Bewegungsmöglichkeiten und damit die Translationsrichtung. Das bedeutet, dass die Führungsabschnitte parallel, vorzugsweise entlang jeweils einer Geraden verlaufen. Die Führungsabschnitte können dabei flächig oder dreidimensional ausgebildet sein. Bevorzugt ist es, wenn die Führungsabschnitte mehrere flächige Teilabschnitte aufweisen, sodass zum Beispiel ein Hintergreifen möglich ist. Damit kann die Führungsfunktionalität mit höherer Sicherheit zur Verfügung gestellt werden.

Es kann von Vorteil sein, wenn der bei einem erfindungsgemäßen Schlitten der Schlittenkörper als Fließpressbauteil, insbesondere als Kaltfließpressteil, ausgebildet ist. Dies führt zu einer besonderes einfachen und kostengünstigen Möglichkeit der Herstellung. Selbstverständlich kann die Fließpressfunktionalität mit weiteren Herstellmöglichkeiten kombiniert werden. Dabei ist insbesondere für das Herstellen der Spindelöffnung auch eine spanende Bearbeitung zu nennen. So kann durch ein Bohrverfahren und ein anschließendes Gewindeschneideverfahren die entsprechende Spindelöffnung für einen erfindungsgemäßen Schlitten zur Verfügung gestellt werden. Auch weitere Behandlungsverfahren, wie zum Beispiel eine Beschichtung oder eine Gefügeveränderung, können insbesondere hinsichtlich einer Variation der mechanischen Eigenschaften für Teilabschnitte des Schlittenkörpers durchgeführt werden.

Ein weiterer Vorteil ist erzielbar, wenn bei einem erfindungsgemäßen Schlitten der Schlittenkörper wenigstens ein Toleranzausgeleichsmittel für den Ausgleich von Fertigungstoleranzen bezogen auf die Führungsabschnitte aufweist. Dies kann zum Beispiel ein Abstandshalter sein, welcher nach detailliertem Messen der erzielten Fertigungstoleranz einen Ausgleich dieser Fertigungstoleranz zur Verfügung stellt. Dadurch, dass bei einem erfindungsgemäßen Schlittenkörper dieser einstückig für alle Funktionalitäten ausgebildet ist, kann durch das Vorsehen eines Toleranzausgleichsmittels eine entsprechend genaue Führungsqualität der Führungsabschnitte zur Verfügung gestellt werden. Beispielsweise kann auf den Führungsabschnitten und/oder auf den Gegenführungsabschnitten der Gegenführungsschiene ein entsprechendes Toleranzausgleichsmittel zur Reduktion eines über die Toleranzabmessungen gehenden Abstandes zwischen den Führungsabschnitten und den Gegenführungsabschnitten angeordnet werden. Selbstverständlich sind jedoch auch andere Toleranzausgleichsmittel, insbesondere geometrisch wirkende Toleranzausgleichsmittel im Rahmen der vorliegenden Erfindung denkbar.

Ein weiterer Vorteil ist erzielbar, wenn bei erfindungsgemäßen Schlitten der Schlittenkörper aus einem hochfesten Material ausgebildet ist. Unter einem hochfesten Material ist insbesondere ein Material zu verstehen, welches den Anforderungen in einer Crashsituation standhält. So ist ein hochfestes Material dafür ausgelegt, Kräfte, welche zum Beispiel von einem Fahrzeugsicherheitsgurt über den Ankerpunkt und die Befestigungsschnittstelle in den Schlitten eingeleitet werden, über die Führungsabschnitte an der Schiene und damit an der Karosserie des Fahrzeugs abzustützen. Die hochfeste Ausbildung dieses Materials bedeutet also, dass zwar grundsätzlich in gewissem Maße eine elastische Verformung stattfinden kann, jedoch bevorzugt keine plastische Verformung in einer Crashsituation ausgeführt wird. Selbstverständlich kann es auch vorteilhaft sein, dass ein definierter Schwellwert einer Kraft vorgesehen wird, sodass ab einer bestimmten Schwere einer Crashsituation des Fahrzeugs gerade gewünscht eine plastische Verformung des Schlittens und/oder einer Gegenführungsschiene einer Höhenverstellvorrichtung auftritt. Dies führt sozusagen zu einem Verklemmen durch plastische Verformung der positionierten Ausrichtung des Schlittens. Ein unerwünschtes Nachgeben bzw. Verstellen während der Crashsituation kann durch diese plastische Verformung einfach und kostengünstig vermieden werden. Die Verwendung von hochfestem Material erlaubt es, eine weitere Reduktion der Dicke der einzelnen Bauteilabschnitte des Schlittenkörpers zu erzielen. Neben einer Reduktion des Gewichts wird auf diese Weise ebenfalls eine weitere Reduktion der Bautiefe und damit eine flachere Ausbildung des Schlittens bzw. der Höhenverstellvorrichtung im Gesamten denkbar bzw. möglich.

Vorteilhaft ist es darüber hinaus, wenn bei einem erfindungsgemäßen Schlitten in der Spindelöffnung ein Buchsenbauteil eingesetzt, welches das Innengewinde aufweist. Bei dem Buchsenbauteil kann es sich insbesondere um ein Kunststoffbauteil oder ein Metallbauteil handeln. Beispielsweise kann Messing oder ein anderes Metall für das Buchsenbauteil eingesetzt werden. Bevorzugt ist es, wenn das Buchsenbauteil im Bereich des Innengewindes hinsichtlich eines verbesserten Gleitens, also mit reduzierter Gleitreibung ausgestattet ist. Dies kann zum Beispiel durch eine Oberflächenbearbeitung oder eine entsprechende Auswahl des Materials des Buchsenbauteils gewährleistet werden. Damit wird es möglich die Geräuschemission, welche bei der Rotation der Arbeitsspindel relativ zu dem Innengewinde entsteht, weiter zu reduzieren.

Ein erfindungsgemäßer Schlitten lässt sich dahingehend weiterbilden, dass die Führungsabschnitte die Gegenführungsabschnitte hintergreifend ausgebildet sind, und jeweils wenigstens zwei Führungsflächen aufweisen, welche voneinander quer zur Führungsrichtung beabstandet sind. Das bedeutet, dass die Führungsfunktionalität mit höherer Sicherheit zur Verfügung gestellt wird. Unter einem Hintergreifen ist insbesondere eine Sicherung quer zur durch die Führungsabschnitte definierten Translationsrichtung des Schlittens zu verstehen. Die Führungsflächen sind dementsprechend ebenfalls quer zur Führungsrichtung, also der Translationsrichtung, voneinander beabstandet. Das Hintergreifen erlaubt dementsprechend sozusagen eine doppelte Führung. Insbesondere handelt es sich um eine senkrechte Beabstandung quer zur Führungsrichtung. Bei den einzelnen Führungsflächen handelt es sich um ebene Führungsflächen. Dementsprechend sind auch die Gegenführungsabschnitte mit identischen Ausbildungen als Gegenführungsflächen ausgebildet .

Gegenstand der vorliegenden Erfindung ist eine Höhenverstellvorrichtung für die Höhenverstellung eines schulternahen Ankerpunktes eines Fahrzeugrückhaltesystems, insbesondere eines Fahrzeugsicherheitsgurtes, aufweisend einen erfindungsgemäßen Schlitten. Weiter weist die Höhenverstellung eine Gegenführungsschiene mit Gegenführungsabschnitten für die Führung des Schlittens und eine Spindel für eine translatiorische Bewegung des Schlittens relativ zur Gegenführungsschiene auf. Durch die Verwendung eines erfindungsgemäßen Schlittens bringt eine erfindungsgemäße Höhenverstellvorrichtung die gleichen Vorteile mit sich, wie sie ausführlich mit Bezug auf einen erfindungsgemäßen Schlitten erläutert worden sind. Insbesondere sind nun hier die Korrelationen zwischen den Führungsabschnitten und den Gegenführungsabschnitten in erfindungsgemäßer Weise ausgebildet. Bevorzugt ist es auch, wenn eine Antriebsspindel Teil der Höhenverstellvorrichtung ist, welche als Spindel in das Innengewinde der Spindelöffnung eingreift. Die Mitrotation des Schlittens wird in diesem Fall durch die Führungsabschnitte in Korrelation zu den Gegenführungsabschnitten verhindert, sodass eine Relativrotation stattfindet, welche zu der gewünschten Translationsbewegung des Schlittens führt.

Es ist möglich, dass bei einer erfindungsgemäßen Höhenverstellvorrichtung die Gegenführungsschiene wenigstens einen Versatzabschnitt aufweist, um Raum für mehr Material des Schlittenkörpers zu geben. Ein solcher Versatzabschnitt kann zum Beispiel als Prägeabschnitt ausgebildet sein. Damit wird zum einen eine Kaltverformung auch der Gegenführungsschiene mit einer Festigkeitssteigerung zur Verfügung gestellt. Darüber hinaus wird durch mehr Material insbesondere in hochbelasteten Abschnitten des Schlittenkörpers eine verbesserte Dauerstabilität auf diese Weise erzielbar.

Ebenfalls von Vorteil ist es, wenn bei einer erfindungsgemäßen Höhenverstellvorrichtung eine Antriebsvorrichtung für den rotatorischen Antrieb der Spindel vorgesehen ist. Dabei ist die Antriebsvorrichtung insbesondere als schallgedämpft gelagerte elektromotorische Antriebsvorrichtung ausgebildet. Für den Antrieb der Antriebsspindel ist dementsprechend über die elektromotorische Ausbildung der Antriebsvorrichtung eine automatisierte Verstellung möglich. Insbesondere kann in Abhängigkeit einer Sitzverstellung automatisch auch über die Antriebsvorrichtung die Höhenverstellung mit der erfindungsgemäßen Verstellvorrichtung durchgeführt werden. Die Schalldämpfung bezieht sich dabei insbesondere auf eine Verkapselung der Antriebsvorrichtung um die Geräuschemission beim Betrieb des Elektromotors der Antriebsvorrichtung in den Innenraum des Fahrzeugs zu reduzieren.

Ein weiterer Vorteil ist es, wenn bei einer erfindungsgemäßen Höhenverstellvorrichtung die Gegenführungsschiene als Strangprofil, insbesondere mit C-förmigem Querschnitt ausgebildet ist. Das führt zu einer weiteren Reduktion des Aufwandes in der Herstellung der Gegenführungsschiene. Insbesondere kann durch einfaches Strangpressen und Zuschneiden die gewünschte erfindungsgemäße Höhenverstellvorrichtung hergestellt werden. Selbstverständlich können dabei unterschiedlich Längen der Gegenführungsschnitte durch einfaches Ablängen ausgebildet werden. Das C-Profil als Strangprofil kann dabei zusätzliche Umbiegungen aufweisen, um auf diese Weise die bereits beschriebene hintergreifende Führungsfunktionalität auszubilden.

Ein weiterer Vorteil kann es sein, wenn bei einer erfindungsgemäßen Höhenverstellvorrichtung die Gegenführungsschiene geprägte Gegenführungsabschnitte mit entsprechenden Gegenführungsflächen aufweist. Hiermit kann bei verringerter Toleranz und damit erhöhter Toleranzgenauigkeit in der Herstellung gleichzeitig diese Herstellung einfach und kostengünstig erfolgen.

Weitere Merkmale, Vorteile und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und der Beschreibung erwähnten Merkmale jeweils für sich Einzeln oder in beliebiger Kombination erfindungswesentlich sein. Es zeigen schematisch:
Fig. 1 eine Ausführungsform einer erfindungsgemäßen Höhenverstellvorrichtung,
Fig. 2 eine Ausführungsform eines bekannten Schlittens,
Fig. 3 eine Ausführungsform eines erfindungsgemäßen Schlittens,
Fig. 4 eine weitere Ausführungsform eines erfindungsgemäßen Schlittens,
Fig. 5 eine Ausführungsform einer erfindungsgemäßen Höhenverstellvorrichtung, und
Fig. 6 eine weitere Ausführungsform eines erfindungsgemäßen Schlittens.

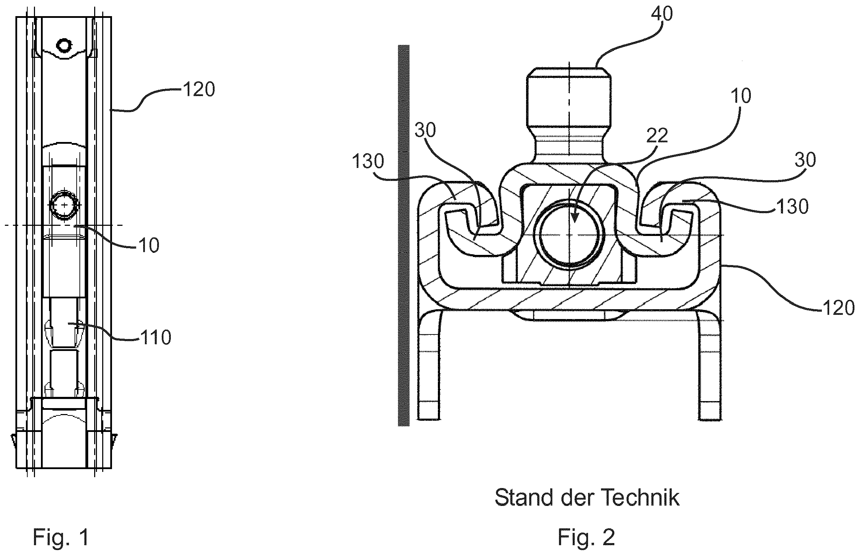

In Fig. 1 ist schematisch eine Höhenverstellvorrichtung 100 dargestellt, welche die grundsätzliche Korrelation zwischen einem erfindungsgemäßen Schlitten 10 und einer Gegenführungsschiene 120 zeigt. Auch ist bereits in dieser Darstellung eine Antriebsspindel 110 zu erkennen.

In Fig. 2 ist dargestellt, wie in bekannter Weise mehrteilige Schlitten 10 ausgebildet sind. Hier sind die Befestigungsschnittstelle 40 und die Führungsabschnitte 30 in einem ersten Bauteil des Schlittens 10 und die Spindelöffnung 22 in einem zweiten Bauteil des Schlittens vorgesehen. Dies führt zu den mehrfach beschriebenen Nachteilen in der Herstellung und der Größe des gesamten Schlittens 10.

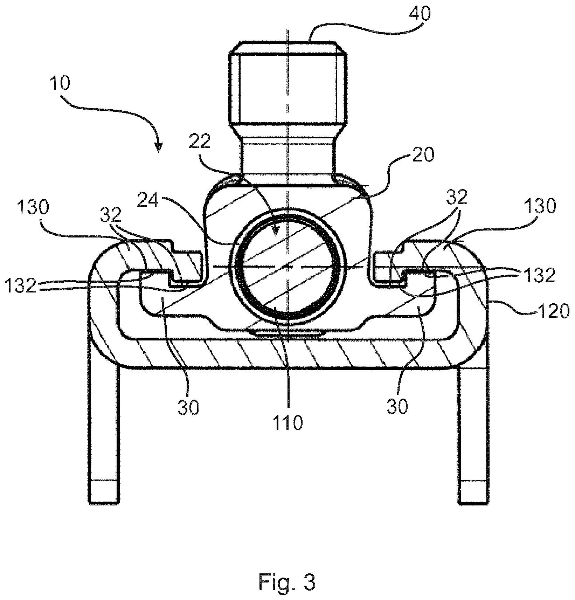

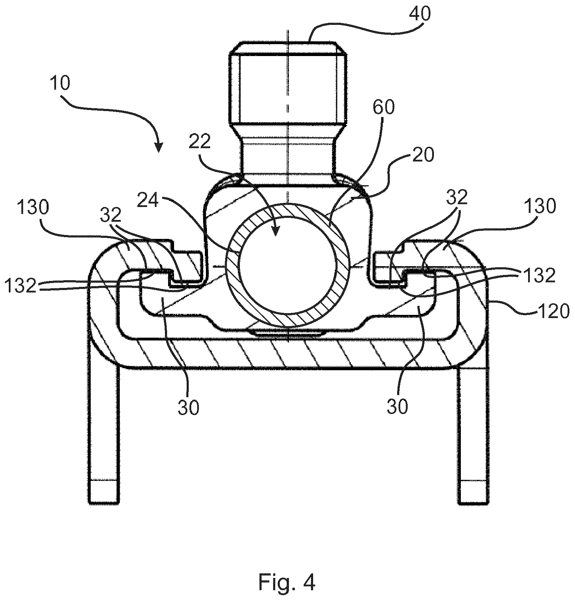

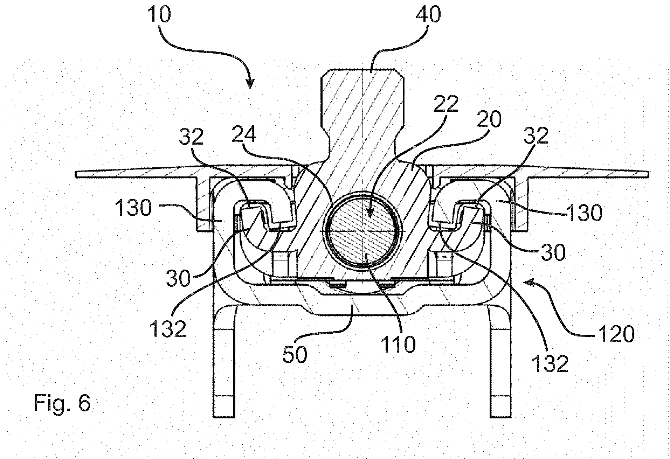

Die Fig. 3 und 4 zeigen genau wie Fig. 6 unterschiedliche Ausführungsformen eines erfindungsgemäßen Schlittens. Hier ist nun eine einstückige Ausbildung des Schlittenkörpers 20 für alle Funktionalitäten, nämlich die Befestigungsschnittstelle 40, die Führungsabschnitte 30 und die damit ausgebildeten Führungsflächen 32 sowie die Spindelöffnung 22 zu erkennen. In der Spindelöffnung 22 ist bei dieser Ausführungsform bereits die Antriebsspindel 110 in Eingriff mit dem entsprechenden Innengewinde 24 dargestellt.

Die Fig. 3, 4 und 6 zeigen darüber hinaus, wie die Korrelation für den führenden Eingriff zwischen den Führungsabschnitten 30 und den entsprechenden Gegenführungsabschnitten 130 mit den Gegenführungsflächen 132 ausgebildet ist. So sind hier mehrere Führungsflächen 32 mit entsprechenden Gegenführungsflächen 132 korreliert um in höherer Sicherheit die Führungsfunktion zu gewährleisten.

Bei der Ausführungsform der Fig. 4 ist darüber hinaus zu erkennen, dass bei der Führung in der Gegenführungsschiene 120 zusätzlich im Schlitten 10 ein Buchsenbauteil 60 eingesetzt ist. Dabei handelt es sich zum Beispiel um eine Messingbuchse, um eine Reduktion der Geräuschemission bei Relativrotation der Antriebsspindel 110 in der Spindelöffnung 22 zu gewährleisten.

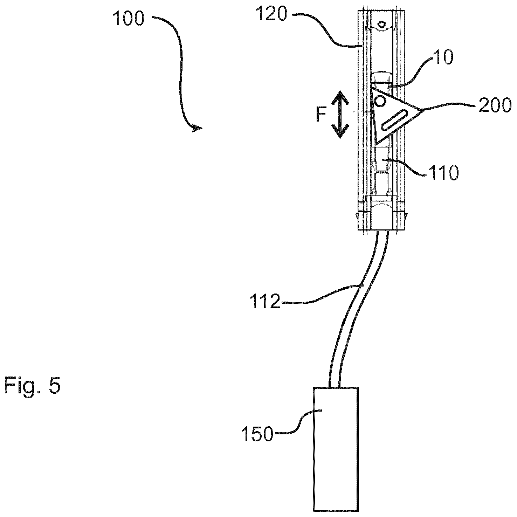

Die Fig. 5 zeigt eine Ausführungsform einer erfindungsgemäßen Höhenverstellvorrichtung 100. Dabei kann eine Ausführungsform, zum Beispiel der Fig. 3, 4 oder 6 als Schlitten 10 in der Gegenführungsschiene 120 angeordnet sein. Auch ist hier gut der schulternahe Ankerpunkt 200 eines Fahrzeugrückhaltesystems, insbesondere eines Fahrzeugsicherheitsgurtes zu erkennen. Über eine Spindel 110, welche hier eine Spindelverlängerung 112 in Form einer flexiblen Antriebsspindel aufweist, ist eine Antriebsvorrichtung 150 verbunden. Diese Antriebsvorrichtung 150 erlaubt es nun, die entsprechende Antriebsleistung als Rotationskraft an die Antriebsspindel 110 weiterzugeben. Ein solches System einer Höhenverstellvorrichtung 100 kann zum Beispiel in der B-Säule eines Fahrzeugs eingebaut werden.

In der Fig. 6 ist eine weitere Ausführungsform eines erfindungsgemäßen Schlittens 10 dargestellt. Dieser basiert auf der technischen Umsetzung der Ausführungsform der Fig. 3 und 4. Jedoch wurde bei der Ausführungsform der Fig. 6 ein Versatzabschnitt 50 in die Gegenführungsschiene 120 eingebracht. Auf diese Weise wird, insbesondere im Vergleich zu den Lösungen der Fig. 3 und 4, eine dickere Materialstärke unterhalb der Spindelöffnung 22 des Schlittens 10 möglich. Damit kann eine verbesserte Festigkeit, insbesondere über lange Einsatzzeiten, mit höherer Sicherheit gewährleistet werden.

Die voranstehende Erläuterung der Ausführungsform beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Schlitten
- 20: Schlittenkörper
- 22: Spindelöffnung
- 24: Innengewinde
- 30: Führungsabschnitt
- 32: Führungsfläche
- 40: Befestigungsschnittstelle
- 50: Versatzabschnitt
- 60: Buchsenbauteil

- 100: Höhenverstellvorrichtung
- 110: Antriebsspindel
- 112: Spindelverlängerung
- 120: Gegenführungsschiene
- 130: Gegenführungsabschnitt
- 132: Gegenführungsfläche
- 150: Antriebsvorrichtung

- 200: schulternaher Ankerpunkt

- F: Führungsrichtung

## Patentansprüche

1. Höhenverstellvorrichtung (100) für die Höhenverstellung eines schulternahen Ankerpunktes (200) eines Fahrzeugsicherheitsgurts, aufweisend einen Schlitten (10), eine Gegenführungsschiene (120) mit Gegenführungsabschnitten (130) für die Führung des Schlittens (10) und eine Antriebsspindel (110) für eine translatorische Bewegung des Schlittens (10) relativ zur Gegenführungsschiene (120), der Schlitten (10) aufweisend einen Schlittenkörper (20) mit zwei parallel zueinander verlaufenden Führungsabschnitten (30) für einen führenden Eingriff in die Gegenführungsabschnitte (130) der Höhenverstellvorrichtung (100), wobei der Schlittenköper (20) eine Spindelöffnung (22) mit einem Innengewinde (24) für einen Gewindeeingriff mit der Antriebsspindel (110) und eine Befestigungsschnittstelle (40) für die Befestigung einer Umlenkung (140) für den Fahrzeugsicherheitsgurt aufweist, wobei die Führungsabschnitte (30), die Spindelöffnung (22) und die Befestigungsschnittstelle (40) einstückig mit dem Schlittenkörper (20) ausgebildet sind, wobei die Führungsabschnitte (30) die Gegenführungsabschnitte (130) hintergreifend ausgebildet sind, **dadurch gekennzeichnet, dass** sowohl die Führungsabschnitte (30) als auch die Gegenführungsabschnitte (130) jeweils wenigstens zwei ebene Führungsflächen (32, 132) aufweisen, welche voneinander quer zur Führungsrichtung (F) voneinander: beabstandet sind.

2. Höhenverstellvorrichtung (100) nach Anspruch 1, **dadurch gekennzeichnet, dass** der Schlittenkörper (20) als Fließpressbauteil, insbesondere als Kaltfließpressbauteil, ausgebildet ist.

3. Höhenverstellvorrichtung (100) nach einem der vorangegangenen Ansprüche, **dadurch gekennzeichnet, dass** der Schlittenkörper (20) wenigstens ein Toleranzausgleichsmittel für den Ausgleich von Fertigungstoleranzen bezogen auf die Führungsabschnitte (30) aufweist.

4. Höhenverstellvorrichtung (100) nach einem der vorangegangenen Ansprüche, **dadurch gekennzeichnet, dass** der Schlittenköper (20) aus einem hochfesten Material ausgebildet ist.

5. Höhenverstellvorrichtung (100) nach einem der vorangegangenen Ansprüche, **dadurch gekennzeichnet, dass** in der Spindelöffnung (22) ein Buchsenbauteil (60) eingesetzt ist, welches das Innengewinde (24) aufweist.

6. Höhenverstellvorrichtung (100) nach einem der vorangegangenen Ansprüche, **dadurch gekennzeichnet, dass** die Gegenführungsschiene (120) wenigsten einen Versatzabschnitt (50) aufweist, um Raum für mehr Material des Schlittenkörpers (10) zu schaffen.

7. Höhenverstellvorrichtung (100) nach einem der vorangegangenen Ansprüche, **dadurch gekennzeichnet, dass** eine Antriebsvorrichtung (150) für den rotatorischen Antrieb der Antriebsspindel (110) vorgesehen ist, wobei die Antriebsvorrichtung (150) insbesondere als schallgedämpft gelagerte elektromotorische Antriebsvorrichtung (150) ausgebildet ist.

8. Höhenverstellvorrichtung (100) nach einem der vorangegangenen Ansprüche, **dadurch gekennzeichnet, dass** die Gegenführungsschiene (120) als Strangprofil, insbesondere mit C-förmigem Querschnitt, ausgebildet ist.

9. Höhenverstellvorrichtung (100) nach einem der vorangegangenen Ansprüche, **dadurch gekennzeichnet, dass** die Gegenführungsschiene (120) geprägte Gegenführungsabschnitte (130) mit entsprechenden Gegenführungsflächen (132) aufweist.

## Claims

1. A height adjustment device (100) for adjusting the height of a vehicle safety belt anchor point (200) located near the shoulder, said device having a slide (10), a counter-guide rail (120) with counter-guide sections (130) for guiding the slide (10) and a drive spindle (110) for a translational movement of the slide (10) relative to the counter-guide rail (120), said slide (10) having a slide body (20) with two guide sections (30) running parallel to each other for a guiding engagement with the counter-guide sections (130) of the height adjustment device (100), the slide body (20) having a spindle opening (22) with an internal screw thread (24) for threaded engagement with the drive spindle (110) and an attachment interface (40) for attaching a deflection mechanism (140) for the vehicle safety belt, the guide sections (30), the spindle opening (22) and the attachment interface (40) being configured integrally with the slide body (20), the guide sections (30) being configured such that they engage behind the counter-guide sections (130),
**characterized in that**
both the guide sections (30) and the counter-guide sections (130) each have at least two flat guide surfaces (32, 132), which are distanced from each other transversely to the guide direction (F).

2. The height adjustment device (100) according to claim 1, **characterized in that** the slide body (20) is configured as an extruded component, in particular as a cold-extruded component.

3. The height adjustment device (100) according to one of the preceding claims, **characterized in that** the slide body (20) has at least one tolerance compensation means to compensate for the manufacturing tolerances in the guide sections (30).

4. The height adjustment device (100) according to one of the preceding claims, **characterized in that** the slide body (20) is made of a high-strength material.

5. The height adjustment device (100) according to one of the preceding claims, **characterized in that** a socket component (60) that has the internal screw thread (24) is inserted into the spindle opening (22).

6. The height adjustment device (100) according to one of the preceding claims, **characterized in that** the counter-guide rail (120) has at least one offset section (50) to create space for more material in the slide body (10).

7. The height adjustment device (100) according to one of the preceding claims, **characterized in that** a drive mechanism (150) is provided for the rotational driving of the drive spindle (110), said drive mechanism (150) being configured in particular as an electromotive drive mechanism (150) with a sound-damped bearing.

8. The height adjustment device (100) according to one of the preceding claims, **characterized in that** the counter-guide rail (120) is configured as an extruded profile section, in particular with a C-shaped cross-section.

9. The height adjustment device (100) according to one of the preceding claims, **characterized in that** the counter-guide rail (120) has embossed counter-guide sections (130) with corresponding counter-guide surfaces (132).

## Revendications

1. Dispositif de réglage en hauteur (100) pour le réglage en hauteur d'un point d'ancrage proche des épaules (200) d'une ceinture de sécurité de véhicule, présentant un chariot (10), un rail de guidage antagoniste (120) avec des sections de guidage antagoniste (130) pour le guidage du chariot (10) et une broche d'entraînement (110) pour un mouvement translatoire du chariot (10) par rapport au rail de guidage antagoniste (120), le chariot (10) présentant un corps de chariot (20) avec deux sections de guidage (30) s'étendant parallèlement l'une à l'autre pour un engagement par guidage dans les sections de guidage antagoniste (130) du dispositif de réglage en hauteur (100), dans lequel le corps de chariot (20) présente une ouverture de broche (22) avec un filet intérieur (24) pour un engagement fileté avec la broche d'entraînement (110) et une interface de fixation (40) pour la fixation d'un renvoi (140) pour la ceinture de sécurité de véhicule, dans lequel les sections de guidage (30), l'ouverture de broche (22) et l'interface de fixation (40) sont réalisées d'un seul tenant avec le corps de chariot (20), dans lequel les sections de guidage (30) sont réalisées venant en prise derrière les sections de guidage antagoniste (130), **caractérisé en ce que** non seulement les sections de guidage (30) mais aussi les sections de guidage antagoniste (130) présentent respectivement au moins deux surfaces de guidage (32, 132) planes qui sont espacées l'une de l'autre transversalement au sens de guidage (F).

2. Dispositif de réglage en hauteur (100) selon la revendication 1, **caractérisé en ce que** le corps de chariot (20) est réalisé comme un composant extrudé, en particulier comme un composant extrudé à froid.

3. Dispositif de réglage en hauteur (100) selon l'une quelconque des revendications précédentes, **caractérisé en ce que** le corps de chariot (20) présente au moins un moyen de compensation de tolérances pour la compensation de tolérances de fabrication par rapport aux sections de guidage (30).

4. Dispositif de réglage en hauteur (100) selon l'une quelconque des revendications précédentes, **caractérisé en ce que** le corps de chariot (20) est réalisé en un matériau très résistant.

5. Dispositif de réglage en hauteur (100) selon l'une quelconque des revendications précédentes, **caractérisé en ce qu'**un composant de douille (60) est inséré dans l'ouverture de broche (22), lequel présente le filet intérieur (24).

6. Dispositif de réglage en hauteur (100) selon l'une quelconque des revendications précédentes, **caractérisé en ce que** le rail de guidage antagoniste (120) présente au moins une section de déport (50) afin de créer de l'espace pour plus de matériau du corps de chariot (10).

7. Dispositif de réglage en hauteur (100) selon l'une quelconque des revendications précédentes, **caractérisé en ce qu'**un dispositif d'entraînement (150) pour l'entraînement rotatif des broches d'entraînement (110) est prévu, dans lequel le dispositif d'entraînement (150) est réalisé en particulier comme dispositif d'entraînement (150) électromotorisé logé avec insonorisation.

8. Dispositif de réglage en hauteur (100) selon l'une quelconque des revendications précédentes, **caractérisé en ce que** le rail de guidage antagoniste (120) est réalisé comme un profil extrudé, en particulier avec une section transversale en C.

9. Dispositif de réglage en hauteur (100) selon l'une quelconque des revendications précédentes, **caractérisé en ce que** le rail de guidage antagoniste (120) présente des sections de guidage antagoniste gaufrées avec des surfaces de guidage antagoniste correspondantes (132).
